# EUROPEAN PATENT SPECIFICATION

(11) **EP 1 693 251 B1**
(45) Date of publication and mention of the grant of the patent: **30.03.2011**
(21) Application number: 05101152.6
(22) Date of filing: 16.02.2005
(51) Int. Cl.: B60R 11/06, B62K 5/02

(54) **Vehicle tool storage structure**
Aufnahmestruktur für Kraftfahrzeug-Werkzeuge
Structure de rangement d'outils

(43) Date of publication of application: 23.08.2006
(73) Proprietor: HONDA MOTOR CO., LTD., Tokyo (JP)
(72) Inventor: Takahashi, Shinji, Chuo 1-chome, Wako-shi, Saitama (JP); Nagamatsu, Tomoko, Chuo 1-chome, Wako-shi, Saitama (JP)
(74) Representative: Poulin, Gérard

(56) References cited:
- EP-A- 1 371 520
- US-A- 2 981 554
- US-A1- 2002 088 661
- US-B1- 6 296 163

## Description

### INDUSTRIAL FIELD

The present invention relates to a vehicle tool storage structure capable of improving operability of taking out tools and efficiently using space.

### PRIOR ART

There is practically available a vehicle tool storage structure by storing tools in a cylindrical tool case and mounting this tool case to a vehicle cover.

An actual vehicle tool storage structure is satisfactorily practical when a tool case or bag is used to store tools and is stored or attached to a specified part.

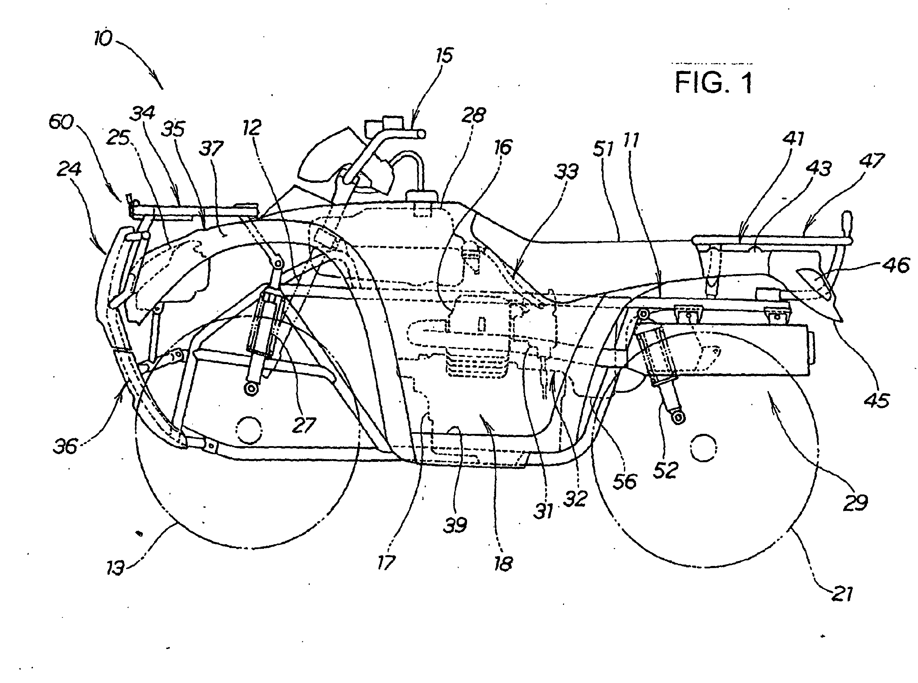

There is known such vehicle tool storage structure as attaches a tool case storing tools near a rear fender (e.g., see Japanese Utility Model, Application Publication No. 5-39039, p. 4, FIG. 1).

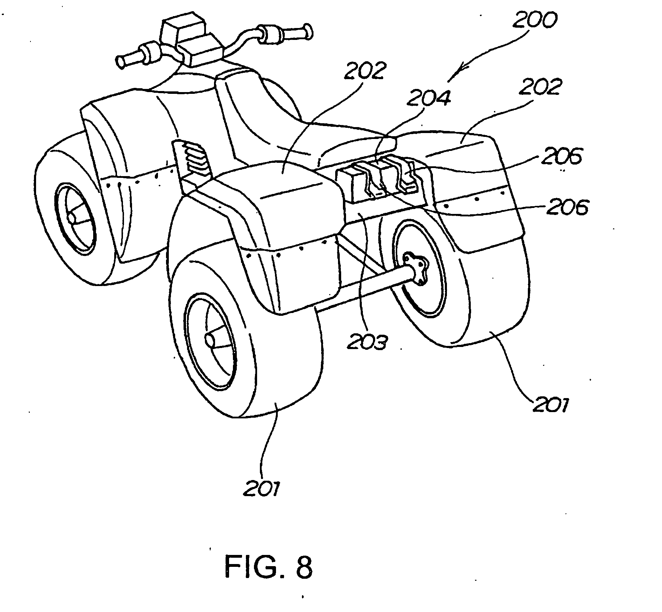

FIG. 8 illustrates a conventional basic configuration. A vehicle tool storage structure 200 according to this figure comprises: both rear fenders 202 to cover rear wheels 201; a rear cover to link these rear fenders 202; a cylindrical tool case 204 mounted on the top surface of the rear cover 203; and bands 206 to fix the tool case 204 to the rear cover 203. In this manner, the tool case 204 is detachably placed on the rear cover 203.

The vehicle tool storage structure 200 allows the tool case 204 to be placed on the rear cover 203. The tool case 204 becomes a hindrance to mounting other loads near the rear cover and the rear fenders 202, for example there has been the problem of being difficult to mount the other loads.

Further, the vehicle tool storage structure 200 uses the cylindrical tool case 204 to store onboard tools (not shown). onboard tools are stored in the tool case 204 in a complicated manner, making it difficult to take out an intended onboard tool.

That is to say, there is expected a vehicle tool storage structure capable of improving operability of taking out tools and mounting a sufficient amount of loads.

The document US-B1-6 296 163 discloses a vehicle tool storage structure for a vehicle according to the preamble of claim 1.

### DISCLOSURE OF THE INVENTION

It is therefore an object of the present invention to provide a vehicle tool storage structure capable of easily taking out intended tools and mounting a sufficient amount of loads.

The present invention according to claim 1 is characterized in that the tool storage section is configured as a drawable tool tray on the carrier.

The tool storage section is configured as a drawable tool tray on the carrier. In this manner, intended onboard tools can be taken out easily.

The present invention according to claim 2 is characterized in that the tool tray has a concave section approximately shaped to the onboard tools.

The tool tray has a concave section approximately shaped to the onboard tools. In this manner, onboard tools can be stored orderly.

According to the present invention as set forth in claim 1, the carrier is disposed over the body cover so as to be able to mount loads. The tool storage section is provided to store onboard tools under the carrier. In this manner, onboard tools can be stored so as not to prevent loads from being mounted. As a result, there is an advantage of ensuring a sufficient amount of loads.

According to the present invention as set forth in claim 1, the tool storage section is configured as a drawable tool tray on the carrier, the tool tray comprising at least one extension section having a long hole engaged with the carrier, the tool tray being movable in a range of a length of the long hole. In this manner, intended onboard tools can be taken out easily. As a result, there is another advantage of improving the operability of taking out tools.

According to the present invention as set forth in claim 2, the tool tray has a concave section approximately shaped to the onboard tools. There is still another advantage of orderly storing onboard tools.

### BRIEF DESCRIPTION OF THE DRAWINGS

FIG. 1 is a side view of a vehicle using the tool storage structure according to the present invention;
FIG. 2 is a plan view of a vehicle using the tool storage structure according to the present invention;
FIG. 3 is a partial side view of the vehicle tool storage structure according to the present invention;
FIG. 4 is an exploded perspective view of the vehicle tool storage structure according to the present invention;
FIG. 5 is a perspective view showing that the tool storage section is drawn from the vehicle tool storage structure according to the present invention;
FIG. 6 is a perspective view taken in the direction of the arrow of FIG. 5;
FIG. 7 is an exploded perspective view of the vehicle tool storage structure according to another embodiment of the present invention; and
FIG. 8 illustrates a conventional basic configuration.

### EXPLANATION OF REFERENCE NUMERALS

10 -- Vehicle
11 -- Body frame
13, 14 -- Wheels (right-and-left front wheels)
34 -- Carrier (front carrier)
35 -- Body cover (front cover)
60 -- Vehicle tool storage structure
61 -- Tool storage section (tool tray)
70 through 77 -- Onboard tools
84 through 86 -- Concave section

### DETAILED DESCRIPTION OF THE INVENTION

The best mode for carrying out the invention will be described with reference to the accompanying drawings. Horizontal and vertical directions of the drawings are based on a direction along which reference numerals are described.

FIG. 1 is a side view of a vehicle that uses the tool storage structure according to the present invention. A vehicle 10 represents vehicles used on uneven roads. A steering shaft 12 is mounted on the front of a body frame 11. The bottom of the steering shaft 12 is coupled to right-and-left front wheels 13 and 14 as wheels. FIG. 1 shows only the front wheel 13 nearer to the viewer. A handle 15 is mounted on the top of the steering shaft 12. A middle of the body frame 11 is mounted with a power unit comprising an engine 16 and a transmission 17. Rear wheels 21 and 22 are disposed at the rear of the body frame 11 and are driven by the power unit 18 together with the front wheels 13 and 14. FIG. 1 shows only the rear wheel 21 nearer to the viewer.

Further in FIG. 1, reference numeral 24 denotes a front grille to cover the body front; 25 and 26 denote headlamps (showing only reference numeral 25 nearer to the viewer); 27 denotes a shock absorber (showing only one of both reference numerals) for the front wheels 13 and 14; 28 denotes a fuel tank mounted on the body frame 11; 29 denotes an exhaust system that is connected to the front of the engine 16 and is bent to be extended toward the rear; 31 denotes a carburetor connected to the rear of the engine 16; 32 denotes an air cleaner system connected to the rear of the carburetor 31; 33 denotes an air vent to cause an atmospheric pressure on fuel surface of a float chamber provided in the carburetor 31; 34 denotes a front carrier to mount loads; 35 denotes a front cover to be used as a body cover for covering the front of the body; 36 denotes a carrier stay (carrier pipe) mounted on the body frame 11; 37 and 38 denote right-and-left fenders (showing only reference numeral 37 nearer to the viewer) that are formed integrally to the front cover 35 to cover the top and the rear of the front wheels 13 and 14; 39 denotes a step (showing only one of both reference numerals) where a driver's step is placed; 41 denotes a rear cover to cover the rear of the body; 43 and 44 denote right-and-left rear fenders (showing only reference numeral 43 nearer to the viewer) that are formed with the rear cover 41 to cover the front and the top of the rear wheels 21 and 22; 45 denotes a mud guard (showing only one of both reference numerals) each mounted on the rear fenders 43 and 44; 46 denotes a tail lamp (showing only one of both reference numerals) each mounted on the mud guards 45; 47 denotes a rear carrier mounted on the rear cover and above the rear fenders 43 and 44; 51 denotes a seat; and 52 denotes a shock absorber (showing only one of both reference numerals) for the rear wheels 21 and 22.

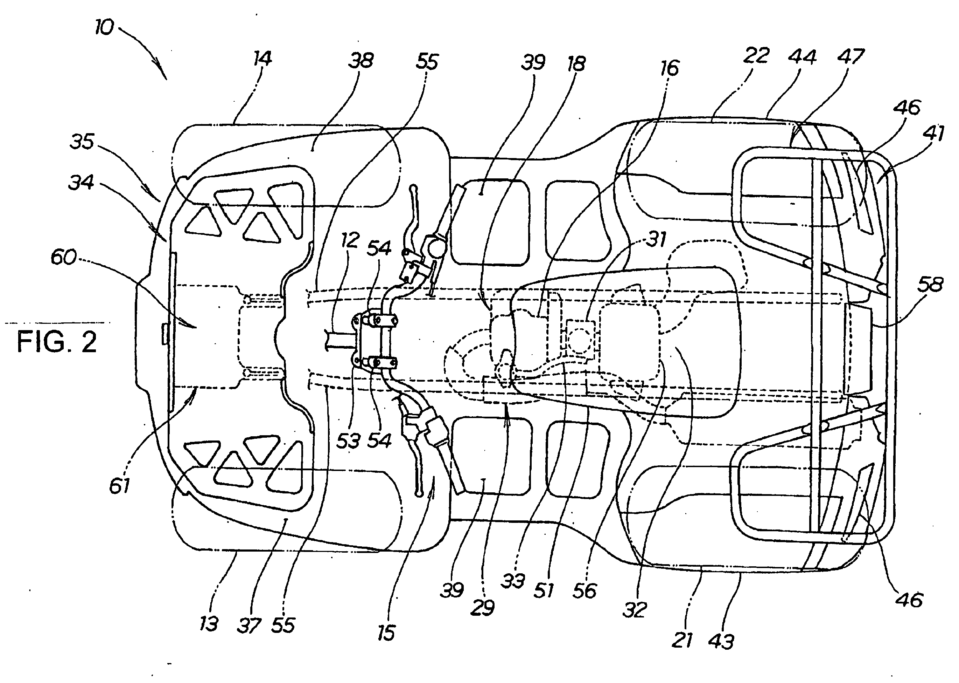

FIG. 2 is a top view of the vehicle that uses the tool storage structure according to the present invention. Right-and-left main frames 55 constitute part of the body frame 11 and are disposed in the center of the body so as to be extended along a cross direction. Between the main frames 55, there are disposed a power unit 18, the carburetor 40, a main air cleaner 56 constituting the air cleaner system 32. The exhaust system 29 is bent in a U shape from the engine 16 and is extended toward the rear.

A handle supporting member 53 is mounted above the steering shaft 12. The handle 15 is mounted on the handle supporting member 53 via handle clamping members 54. The mud guards 45 are disposed on the right and left sides of the body so as to sandwich a license plate 58.

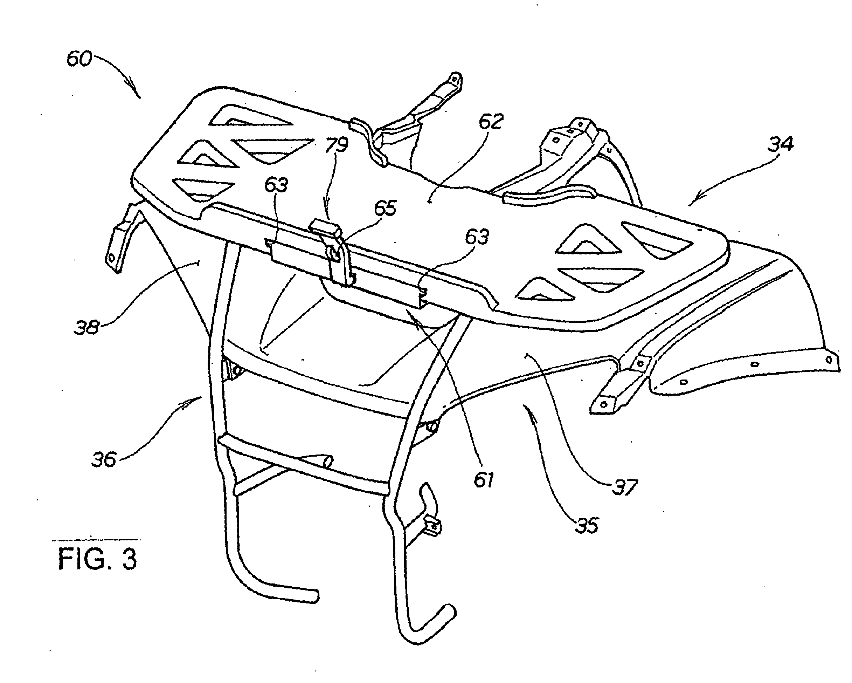

FIG. 3 is a partial side view of the vehicle tool storage structure according to the present invention. A vehicle tool storage structure 60 comprises: a front cover 35 having right-and-left fender sections 37 and 38 each to cover the right-and-left front wheels 13 and 14 (see FIG. 2); a front carrier 34 provided above the front cover 35 to mount loads; and a tool storage structure 61 provided under the front carrier to store onboard tools.

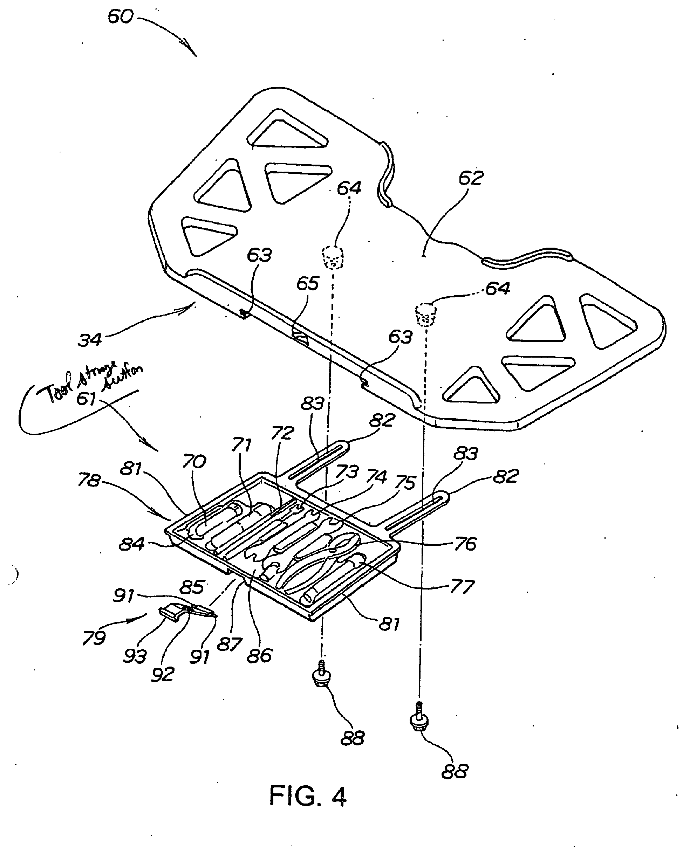

FIG. 4 is an exploded perspective view of the vehicle tool storage structure according to the present invention.

The front carrier 34 comprises: a mounting section 62 to mount loads; right-and-left guide grooves 63 formed under the front of the mounting section 62 to drawably guide the tool storage section 61; right-and-left mounting bosses 64 formed under the mounting section 62 to drawably mount the tool storage section 61; and a hook section 65 formed on the front of the mounting section 62 to hook the tool storage section 61.

Specifically, the tool storage section 61 is a tool tray drawably mounted on the front carrier 34. The tool storage section 61 comprises: a tray body 78 to store onboard tools 70 through 77; and a hook lever 79 rotatably mounted on the tray body 78 to be engaged with the hook section 65.

The tray body 78 comprises: right-and-left rails 81 formed on both sides thereof to each engage with right-and-left guide grooves 63; extended sections 82 extending from the rear; long holes 83 each formed in the extended sections 82; concave sections 84 through 86 approximately matching shapes of onboard tools 70 through 77; and a mounting section 87 to rotatably mount the hook lever 79.

The concave section 84 approximately matches an onboard tool 70. The concave section 85 approximately matches an onboard tool 71. The concave section 86 approximately matches onboard tools 72 through 77.

Reference numerals 88 denote bolts (screws) that are fit to mounting bosses 64 to slidably guide the long holes 83.

The hook lever 79 comprises: projections 91 fit to the mounting section of the tray body 78; an aperture 92 to engage with the hook section 65; and a tab 93 to engage with or disengage from the hook section 65.

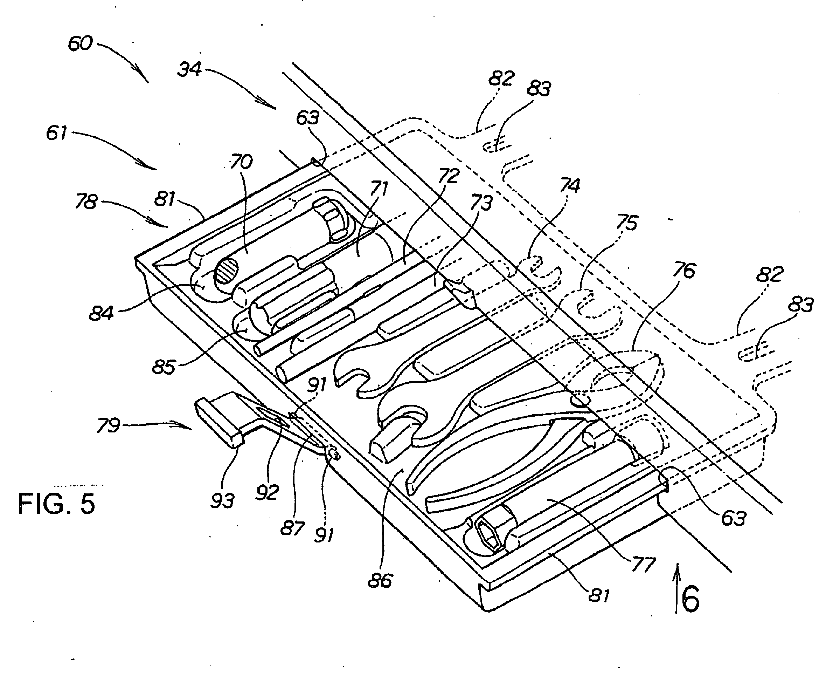

FIG. 5 is a perspective view showing that the tool storage section is drawn from the vehicle tool storage structure according to the present invention. The vehicle tool storage structure 60 is used with the vehicle 10 configured as follows. The body frame 11 is rotatively mounted with the right-and-left front wheels (wheels) 13 and 14 as shown in FIG. 2. The front cover (body cover) 35 covers the body frame 11. The front cover 35 is integrally formed with the right-and-left fender sections 37 and 38 to cover the right-and-left front wheels 13 and 14. The front carrier (carrier) 34 is disposed over the front cover 35 to mount loads. The tool storage section (tool tray) 61 is provided under the front carrier 34 so as to store the onboard tools 70 through 77.

For example, it is preferable to easily take out intended onboard tools because the operability of taking out tools can be improved. It is also preferable to store onboard tools so as not to prevent loads from being mounted because a sufficient amount of loads can be mounted.

That is to say, the front carrier (carrier) 34 is disposed over the front cover (body cover) 35 so as to be able to mount loads. The tool storage section (tool tray) 61 is provided to store the onboard tools 70 through 77 under the front carrier 34. In this manner, the onboard tools 70 through 77 can be stored so as not to prevent loads from being mounted. As a result, it is possible to ensure a sufficient amount of loads.

The vehicle tool storage structure 60 may be also considered to be the tool storage section (tool tray) 61 having the concave sections 84 through 86 approximately matching shapes of the onboard tools 70 through 77.

The tool storage section (tool tray) 61 has the concave sections 84 through 86 approximately matching shapes of the onboard tools 70 through 77. The onboard tools 70 through 77 can be stored orderly. As a result, it is possible to improve the operability of taking out tools.

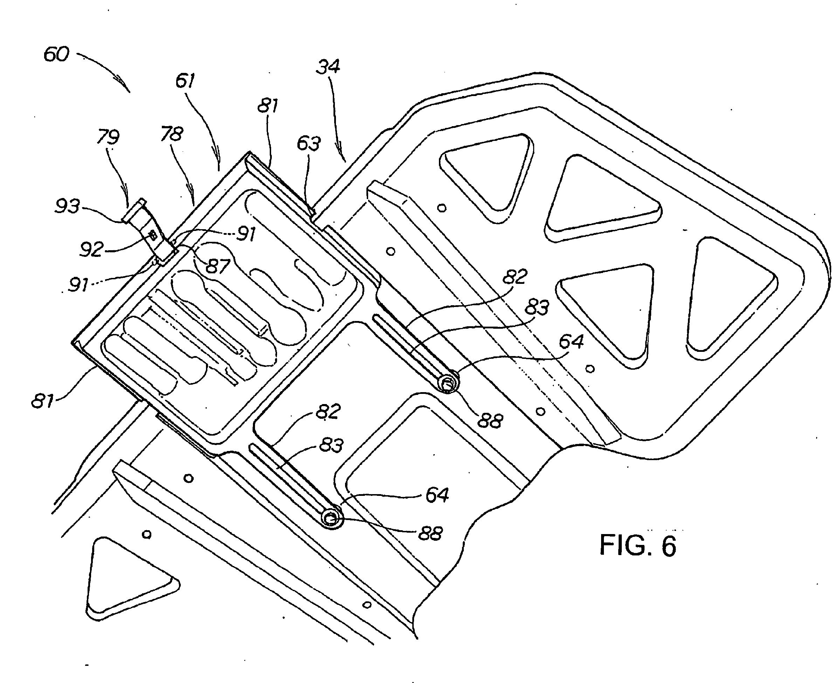

FIG. 6 is a perspective view taken in the direction of the arrow of FIG. 5 and shows the bottom of the vehicle tool storage structure 60.

The vehicle tool storage structure 60 indicates that the tool storage section 61 is provided as a drawable tool tray on the front carrier (carrier) 34.

Since the tool storage section 61 is provided as a drawable tool tray on the front carrier (carrier) 34, the intended onboard tools 70 through 77 (see FIG. 5) can be taken out easily.

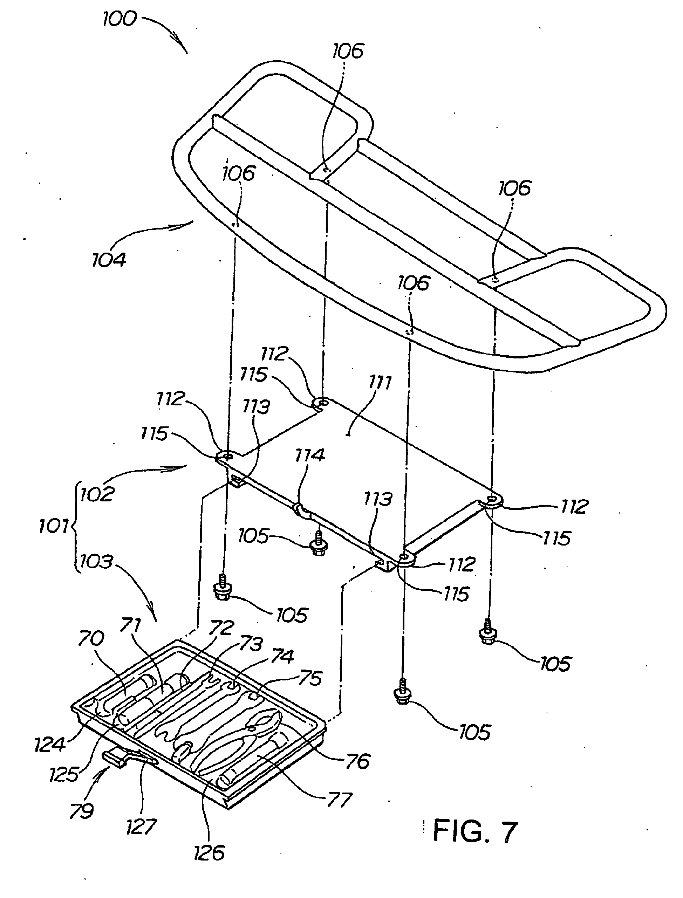

FIG. 7 is an exploded perspective view of the vehicle tool storage structure according to another embodiment of the present invention. The same reference numerals are used to depict the same parts as used for the vehicle tool storage structure 60 (see FIGS. 2 and 4) and a detailed description is omitted for simplicity.

A vehicle tool storage structure 100 comprises the front cover 35, a front carrier 104, and a tool storage section 101. The front cover 35 has the right-and-left fender sections 37 and 38 to cover the right-and-left front wheels 13 and 14 (see FIG. 2), respectively. The front carrier 104, a carrier made of pipes, is provided over the front cover 35 to mount loads. The tool storage section 101 is provider under the front carrier 104 to store the onboard tools 70 through 77.

The tool storage section 101 comprises a storage base 102 and a tool tray 103. The storage base 102 is attached to the front carrier 104. The tool tray 103 is drawably mounted on the storage base 102 and stores the onboard tools 70 through 77.

Reference numeral 105... denotes a bolt to mount the storage base 102 on the front carrier 104; and 106... denotes a bolt hole formed in the front carrier 104. Ellipsis points ... indicate that a plurality of corresponding components are provided. The same applies to the following description.

The storage base 102 is formed with: support sections 112... that are formed in a body 111 to be fixed to the front carrier 104; right-and-left guide grooves 113 formed under the body 111; and a hook section 114 to hook the tool tray 103. The support sections 112... are formed with through holes 115... to insert bolts 105...

The tool tray 103 comprises: a tray body 118 to store the onboard tools 70 through 77; and the hook lever 79 rotatably mounted on the tray body 118 to be engaged with the hook section 114.

The tray body 118 comprises: right-and-left rails 121 formed on both sides thereof to each engage with right-and-left guide grooves 113; concave sections 124 through 126 approximately matching shapes of the onboard tools 70 through 77; and a mounting section 127 to rotatably mount the hook lever 79.

While the vehicle tool storage structure 60 according to the present invention has the tool storage section 61 formed on the front carrier 34 as shown in FIG. 3, the present invention is not limited thereto. The tool storage section may be provided on the rear carrier.

While the vehicle tool storage structure 60 according to the present invention is provided with the common concave section 86 to store the onboard tools 72 through 77 as shown in FIG. 5, the present invention is not limited thereto. Individual concave sections may be provided to store individual onboard tools.

### INDUSTRIAL APPLICABILITY

The vehicle tool storage structure according to the present invention is appropriately applicable to vehicles used on uneven roads such as 4-wheel buggy.

## Claims

1. A vehicle tool storage structure (60) for a vehicle (10) so configured that right-and-left wheels (13, 14) are rotatably mounted on a body frame (11), a body cover (35) covers said body frame (11), and right-and-left fender sections (37, 38) are provided integrally with or independently of said body cover (35) to cover said right-and-left wheels (13, 14),
wherein a carrier (34) is disposed over said body cover (35) so as to be able to mount loads; and
wherein a tool storage section (61) is provided to store onboard tools (70-77) under said carrier (34), **characterized in that** said tool storage section (61) is configured as a drawable tool tray (78) on said carrier (34), said tool tray (78) comprising at least one extension section extending from the tool storage section (61), the at least one extension section having a long hole (83) engaged with the carrier (34), the tool storage section being moveable in a range of a length of the long hole (83).

2. The vehicle tool storage structure (60) according to claim 1,
wherein said tool tray (78) has a concave section (84-86) approximately shaped to said onboard tools (70-77).

## Patentansprüche

1. Fahrzeugwerkzeugaufbewahrungsstruktur (60) für ein Fahrzeug (10), das so eingerichtet ist, dass linke und rechte Räder (13, 14) drehbar an einem Karosserierahmen (11) montiert sind, eine Karosserieabdeckung (35) den Karosserierahmen (11) abdeckt und linke und rechte Kotflügelabschnitte (37, 38) integral mit oder unabhängig von der Karosserieabdeckung (35) bereitgestellt sind, um die linken und rechten Räder (13, 14) abzudecken,
wobei ein Träger (34) über der Karosserieabdeckung (35) angeordnet ist, so dass Lasten aufgeladen werden können und
wobei ein Werkzeugaufbewahrungsabschnitt (61) bereitgestellt ist, um Bordwerkzeuge (70-77) unter dem Träger (34) aufzubewahren, **dadurch gekennzeichnet, dass** der Werkzeugaufbewahrungsabschnitt (61) als ein ausziehbares Werkzeugfach (78) auf dem Träger (34) ausgebildet ist, wobei das Werkzeugfach (78) weinigstens einen Erstreckungsabschnitt umfasst, der sich von dem Werkzeugaufbewahrungsabschnitt (61) erstreckt, wobei der wenigstens eine Erstreckungsabschnitt ein Langloch (83) aufweist, das mit dem Träger (34) in Eingriff steht, wobei der Werkzeugaufbewahrungsabschnitt in einem Bereich einer Länge des Langlochs (83) beweglich ist.

2. Fahrzeugwerkzeugaufbewahrungsstruktur (60) nach Anspruch 1,
wobei das Werkzeugfach (78) einen konkaven Abschnitt (84-86) aufweiset, der eine den Bordwerkzeugen (70-77) näherungsweise angepasste Form aufweist.

## Revendications

1. Structure de rangement d'outils (60) pour un véhicule (10) conçu de sorte que des roues droite et gauche (13, 14) sont montées de sorte à tourner sur un châssis de carrosserie (11), un capot de carrosserie (35) couvre ledit châssis de carrosserie (11), et des sections garde-boue droite et gauche (37, 38) sont prévues comme étant solidaires ou indépendantes dudit capot de carrosserie (35) pour couvrir lesdites roues droite et gauche (13, 14),
dans laquelle un porte-bagages (34) est disposé au-dessus dudit capot de carrosserie (35) de manière à permettre le montage de charges; et
dans laquelle une section de rangement d'outils (61) est prévue pour permettre le rangement d'outils de bord (70 à 77) sous ledit porte-bagages (34), **caractérisée en ce que** ladite section de rangement d'outils (61) se présente sous la forme d'un plateau à outils qui peut être tiré (78) sur ledit porte-bagages (34), ledit plateau à outils (78) comprenant au moins une section de prolongement s'étendant à partir de la section de rangement d'outils (61), l'au moins une section de prolongement comportant un orifice allongé (83) en prise avec le porte-bagages (34), la section de rangement d'outils étant mobile dans une plage correspondant à la longueur de l'orifice allongé (83).

2. Structure de rangement d'outils (60) selon la revendication 1,
dans laquelle ledit plateau à outils (78) comporte une section concave (84 à 86) ayant approximativement la forme desdits outils de bord (70 à 77).
